# EUROPEAN PATENT SPECIFICATION

(11) **EP 2 167 252 B1**
(45) Date of publication and mention of the grant of the patent: **01.05.2013**
(21) Application number: 08762361.7
(22) Date of filing: 12.06.2008
(51) Int. Cl.: B21D 5/16, B21D 5/01

(54) **METHOD FOR BENDING SHEET MATERIAL AND SYSTEM FOR BENDING SHEET MATERIAL THROUGH ATTACHMENT DEVICES**
VERFAHREN ZUM BIEGEN VON BLECHMATERIAL UND SYSTEM ZUM BIEGEN VON BLECHMATERIAL DURCH BEFESTIGUNGSVORRICHTUNGEN
PROCÉDÉ DE CINTRAGE D'UN MATÉRIAU EN FEUILLE ET SYSTÈME DE CINTRAGE D'UN MATÉRIAU EN FEUILLE GRÂCE À DES DISPOSITIFS DE FIXATION

(30) Priority: 13.06.2007 GB 0711441
(43) Date of publication of application: 31.03.2010
(73) Proprietor: Epps, Gregory, Wandsworth Greater London SW18 2DF (GB)
(72) Inventor: Epps, Gregory, Wandsworth Greater London SW18 2DF (GB)
(74) Representative: Carter, Stephen John
(86) International application number: PCT/GB2008/002032
(87) International publication number: WO 2008/152399

(56) References cited:
- WO-A-2006/031553
- US-A- 4 468 946
- US-A1- 2002 184 936
- US-A1- 2004 168 500

## Description

### FIELD OF THE INVENTION

This invention relates to forming, more particularly bending, sheet material, such as metal, plastics (including thermo-plastics and thermoset-plastics), paper, card or composite material in sheet form.

### BACKGROUND

Forming techniques are required to create useful shapes from sheet stock of materials such as metal. The various techniques available today - including pressing, planishing, hydroforming, bending via a brake press or folding machine, or rolling - each have attendant advantages and disadvantages dependant on the intended use and volume of output.

Pressing is the current preferred method for creating complex shapes because of the ability to form complex double curved three-dimensional forms, within the limits of draft angle and depth of draw. Pressing can be easily integrated into a mass production manufacturing setup, and benefits from fast forming times (seconds) as parts are stamped quickly with a large force. However, dedicated tooling must be created for each part run, so pressing is only economic over large part runs. In addition, some more complex forms must go through multistage pressings to achieve the final form. Pressing induces deformation (often unpredictable) of the blank sheet in all three directions, so extra material is generally included at the margins and later trimmed in a separate operation.

Planishing is an older method of achieving similar forms to pressing. In the past the forms would have been beaten out by hand using a hammer and various forming tools. This method is incremental and therefore slow, but does have the potential to form overhangs. The final form is determined by the craftsman, and can therefore be completely custom. However, this process is inefficient over large part runs, and it may not be possible to achieve close tolerances.

Hydroforming requires only a 'female' mould, with fluid pressure providing the force to push the sheet material into shape. Sheet and tube can be processed in this way. Related to this is explosive forming, where the pressure comes from a controlled explosion. This method has similar advantages and disadvantages to pressing.

The brake press or press brake is specifically used to bend along a straight line, to a specified angle. The edge requiring folding is inserted into the machine, and the work-piece is moved in an arc defined by the axis of the fold line. The machine can be CNC controlled, and is an accessible way of creating varied form, within the limited language of angled folds and planes. Folding Machines typically hold the work piece and move the edges requiring folding in one operation. Folding machines can produce finished articles. Again CNC control is common. Both methods require a tooled edge over which to form a bend or fold so the shapes of fold which can be produced are necessarily limited.

Rolling can be used to form sheet material in an incremental fashion until it reaches a desired form. Flat sheet is passed through sets of rollers that guide the material into a linear form. The range of form is limited to extruded profiles; be they straight extrusions or curved extrusions. Rollers must be manufactured to suit specific designs. Rolling could be used to create some curved fold lines, but is limited to extrusions, and so only a small number of forms would be possible.

The manufacturing industry has seen a recent shift towards flexible manufacturing. There is a general move away from the fixed mass production set-up, which requires a large outlay and large part runs to recoup costs, towards reconfigurable manufacturing methods. The use of CNC is the primary driver of these technologies, as machines can be programmed to perform different tasks, dependant on data input, rather than being built for a specific task. In a more customer-centric economy, the ability to change styles at the request of the customer, or let them choose from a wide range a no extra cost, has become a necessity. This type of manufacturing is known as Mass Customization after the book of the same title by Joseph B. Pine.

Despite the drive towards leaner manufacturing, the forming of sheet metal is predominantly by pressing, primarily for the advantages described above.

A method of bending sheet material is disclosed in US6640605 (Gitlin et al.). Here, the sheet metal is thinned in regions either along or immediately adjacent to a bending line. These thinned regions allow the metal to be easily bent along the bending line using conventional hand tools or non-specialised machines. The thinned regions may be shaped as slots having a specific width, length, end shape, spacing from each adjacent slot, and depth into the metal
sheet. Further bending methods for forming three-dimensional structures from sheet material are known from, for example, US 4468946 and WO2006/031553.

US6341460 (Lalvani) discloses a class of undulated building structures constructed from sheets of suitable material and composed on sinuous curved faces meeting at constant angle at sinuous curved edges. The structures are constructed by scoring and folding a single sheet or by scoring and folding an assembly of sheets.

### SUMMARY OF THE INVENTION

The present invention concerns a method and a system for bending sheet material. In this context, bending includes any means of transforming a planar sheet into a three-dimensional structure, or a formed sheet into a new form, including folding.

The present invention provides a method of bending sheet material according to claim 1. In some embodiments each of the two or more attachment points is moved in space along a predetermined trajectory (i.e. none of the attachment points are fixed). The trajectories may be (and typically will be) non-parallel. The trajectories will generally also be non-linear. It may not always be necessary to predetermine the trajectories where the bending is performed manually.

The present invention provides a method of folding and/or bending sheet material by application of force through attachment points at specific locations on the surface of the sheet material in order to cause a movement through a predetermined path. The movement is capable of causing folding along one or more curved (for example, a curved fold) or straight lines, or along a combination of curved and straight lines.

Accordingly, using the method of the present invention, it is possible to induce a bend or fold in a sheet at a desired location.

The locations at which the attachment points are placed can be selected to guide the forming of the fold line, e.g. to cause the path of a fold line, change the path of a fold line, maintain the path of a fold line, or to follow a desired shape.

A particular advantage of the present invention is that dedicated tooling is not required. That is, no moulds or formers are required. Instead, any one of an infinite number of possible bends may be achieved using one system, and one-off or short-run bent shapes can be created without the need to create expensive tooling. As a result, production lines can be configured to produce a variety of different bent shapes.

Another advantage of the present invention is that, where bending about a fold line is desired, it is not generally necessary to pre-work the sheet by scoring, perforating etc. in order to influence the position of the desired fold line. In the methods described by Gitlin et al. and Lalvani the fold line acts as a guide to form the surface, whereas in the method of the present invention the manipulation of the surface creates the fold. Geometrically the resulting shapes may be identical, but the latter will have greater structural integrity where material has not been removed. Notably, the method of the present invention can produce a larger range of shapes than the method of Lalvani.

Unlike pressing, trimming of margin material is not usually required after forming. Developable surfaces have a theoretical zero-stretch (although there will be some predictable local deformation around any fold lines), which makes predicting the final form simpler than for a pressed item. As such, this additional finishing operation can be dispensed with.

The present invention can achieve the same results as traditional methods using a brake press or folding machine. However, complex bends, e.g. overhangs, can be performed using the present method without the need for dedicated formers or blade edges. In addition, the use of CNC control for machinery for this application enables the present invention to be used to generate any number of different configurations.

In preferred aspects the present invention is limited to the creation of developable surfaces, defined as ruled surfaces of single curvature. In mathematics, a developable surface is a surface with zero Gaussian curvature. That is, it is surface that can be flattened onto a plane without distortion (i.e. stretching, compressing, tearing). Inversely, it is a surface that can be made by transforming a plane (i.e. folding, bending, rolling, cutting, and joining). The forms possible within this definition are still wide ranging; for instance the architecture of the Guggenheim Museum in Bilbao by Frank Gehry is based on the use of developable surfaces for form finding and the efficient cladding of substructures. The forms here are clearly expressive, and provide the identity of the building.

The method of the present invention can also be used to create bends or folds on pre-formed, i.e. non-flat, surfaces. Examples of such pre-formed surfaces include double curvature surfaces such as dome or saddle shapes. Another example of a pre-formed surface is one that has one or more tabs created in it or at an edge, the tabs then being folded up or down in accordance with the method of the present invention. Thus, the method can be used to add finished details to parts pre-formed by other methods such as pressing.

In some embodiments the invention can be used to create forms including developable surfaces defined by one or more curved folds.

Applications of the method of the present invention include but are not limited to: vehicle body panels and chassis members (super structure, substructure and combined super/sub structure), crumple zones and other components, structural and un-structural; architectural cladding panels and structural elements, roofs, self supporting structures (tent-like), shelters and other components, structural and un-structural; furniture such as tables, chairs, shelving cabinets, beds, etc; boxes (casings for machinery and electronic goods (microwaves, hi-fi)); packaging ; bicycle frames and components; boat hulls and components; aeroplane frames structure and components, and other components, structural and un-structural; nano-technology; reflectors (e.g. for satellite dishes); skate ramps; train bodies, chassis and components; decorative items, arts, sculpture; toys and games; parasols/umbrellas; household items, cutlery, plates, door handles, saucepans, receptacles, lighting enclosures; and environmental architectural ironmongery e.g. street furniture, bins, lamp posts; protective clothing; tubes, ducts and pipes.

### BRIEF DESCRIPTION OF THE DRAWINGS

Embodiments of the invention will now be described by way of example, with reference to the accompanying drawings in which:
Figs. 1 (a) to (r) show a sequence of stages in the bending of a sheet of material;
Figs. 2 (a) to (e) show a range of possible positions of attachment pads;
Figs. 3 (a) to (e) show a range of possible numbers and positions of attachment pads;
Figs. 4 (a) to (f) show three-dimensional views of a sheet 10 folded in various ways;
Figs. 5 (a) to (h) show flat sheets with various fold lines;
Figs. 6 (a) and (b) show, respectively, closed and open containers in flat and assembled form;
Figs. 7 (a) and (b) show a complex polygonal structure in flat and assembled form;
Figs. 8 (a) and (b) show isometric views of complex curved structures;
Fig. 9 (a) shows a complex structure in assembled form, and Figs. 9 (b) and (c) show the flat sheets required for the assembly;
Figs. 10 (a) and (b) show a frusto-cone in flat and assembled form;
Fig. 11 shows a sheet consisting of conical, flat and cylindrical surface patches orientated tangent to each other;
Figs. 12 (a) to (d) show sheets with faded folds in both folded and flat form;
Figs. 13 (a) and (b) show two folded sheets assembled together, both across a bend (a) and across a fold (b);
Fig. 14 (a) to (d) show forms of tabs/flaps that can be formed in accordance with embodiments of the present invention.

### DETAILED DESCRIPTION

The following is a description of the preferred embodiment. In the figures, like parts are identified by the same reference numerals.

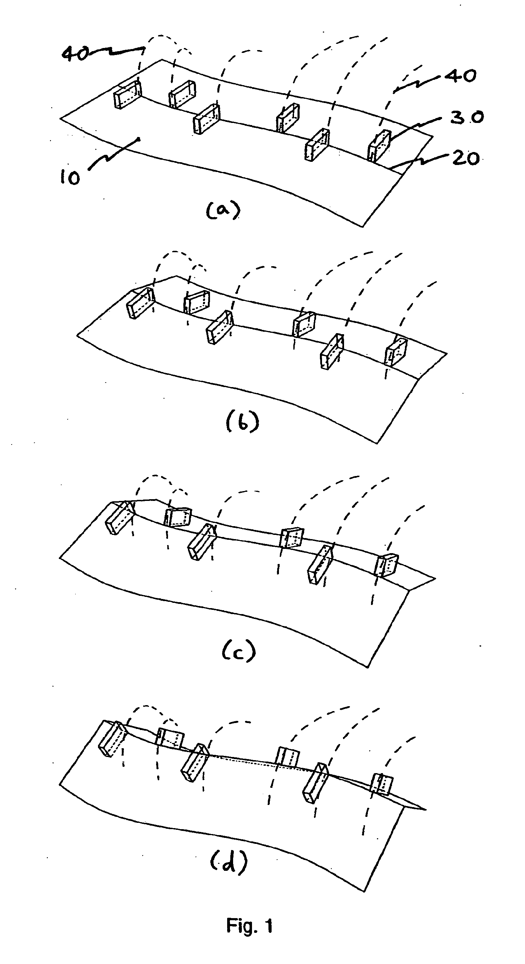

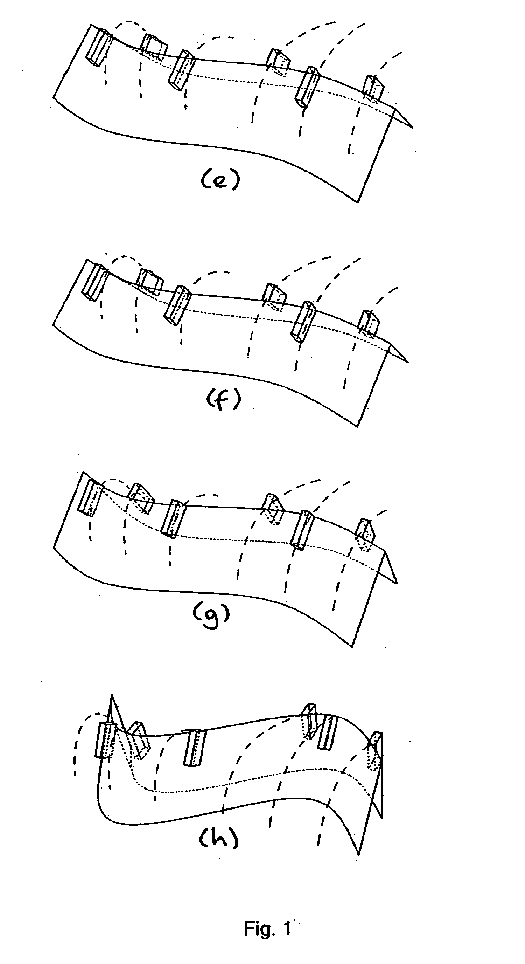

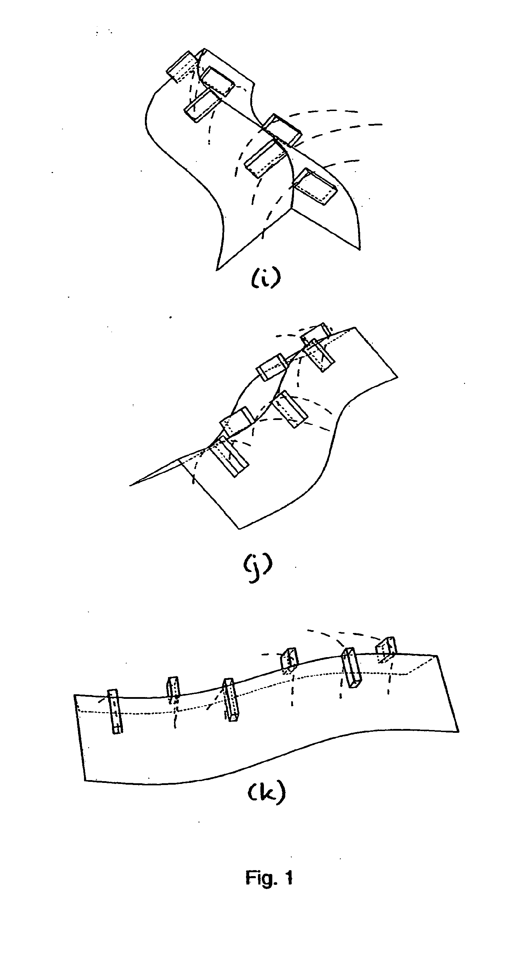

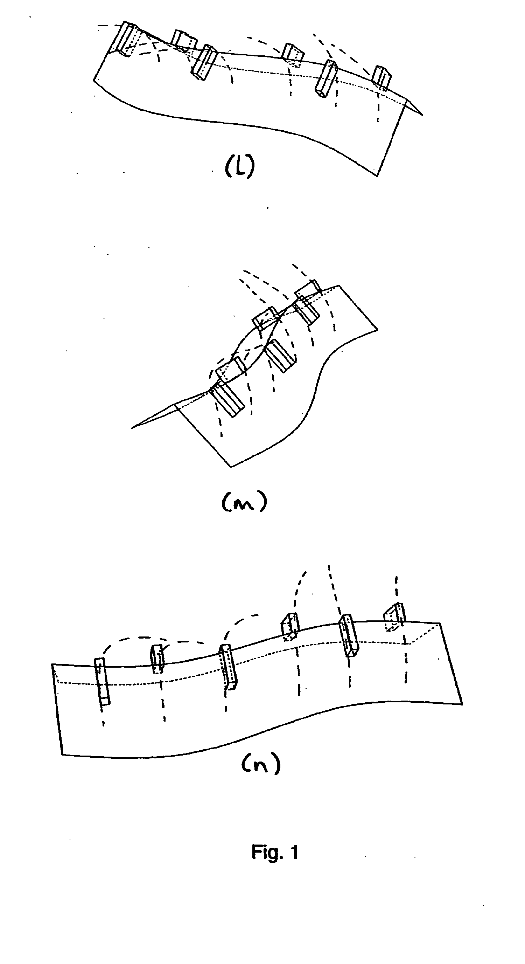

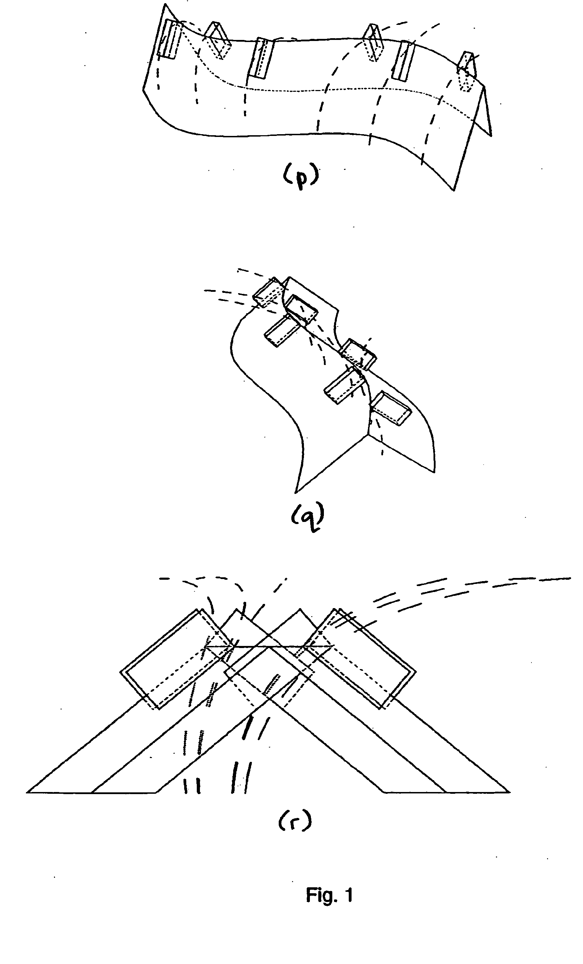

Figs. 1 (a) to (h) show a sequence of stages in the bending of a sheet 10 along an s-shaped fold line 20. Figs. 1 (i) to (q) show a sheet 10 part way through a bending operation. Fig. 1 (r) shows an end view of the bent sheet 10 of Figs. 1 (i) to (q). In each of Figs. 1 (a) to (r) the progress of the attachment pads 30 along trajectories 40 can be seen.

In Figs. 1 (a) to (r) attachment pads 30 are moved through predetermined trajectories 40 by, e.g., one or more robotic arms or other suitable method. The trajectories are predetermined through simulation, calculation or trial and error. Ideally, all attachment pads 30 are moved simultaneously so that the start and finish times are synchronised, though typically some unsynchronised movement can be tolerated without causing, e.g., unwanted creasing. The trajectories 40 can be defined relative to the fold line 20 and/or relative to the sheet 10 so that the sheet can be moved independently. Additional stages of folding and bending can be performed subsequently on a formed sheet.

Importantly, it is possible to achieve a particular bent shape in any one of a number of different ways, because there are a large number of variables - attachment pad position, trajectory, movement speed etc. Equally, a number of different bent shapes may be achieved from a single attachment pad configuration by, e.g., varying their movement trajectories.

Attachment pads may be positioned on one or both surfaces of the sheet 10. Suitable apparatus for the attachment pads 30 include, but are not limited to, suction cups, electro-magnets, or clamps (e.g. grippers). In some cases the attachment pads may be adapted to attach to holes or other recessed formations in or through the surface of the sheet (e.g. the pads may include elements that extend through or into such holes to attach to the sheet material).

Ideally the attachment pads will have a flexible interface with the sheet, so as to allow for the change in shape of the sheet during bending.

The attachment pads can be actuated by hand or by any suitable industrial actuator such as a robotic arm controlled by a controller. The attachment pads may be linked to one another (so long as they are free to move relative to one another to the extent necessary to achieve the desired folds). Where more that one attachment pad is moved, the actuators that move them are preferably controlled in synchronisation with one another and, typically, will be controlled by the same controller. The movement of multiple attachment pads may be achieved; for instance, using a number of robots controlled by a single controller.

The necessary applied force is generally dependent on the thickness and surface area of the sheet, the number of folds, their proximity to each other, and the tightness of any bends.

During bending the material local to the fold line 20 plastically deforms so that the sheet remains substantially in its bent form after movement of the attachment pads has ceased. As usual with bent or folded sheet material, there will probably be a certain amount of spring back. This should be taken into account when initially determining the attachment pad trajectories. Where the sheet is bent about a fold line there will also be some minor local material stretching which should be taken into account in the known manner.

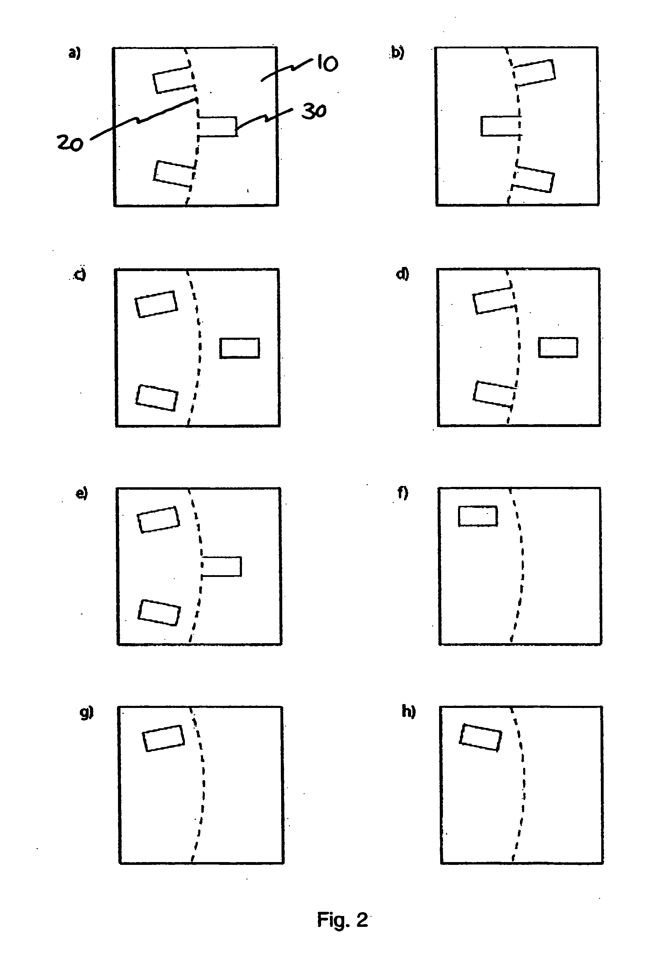

Figs. 2(a) to (e) show a range of possible relative positions of three attachment pads 30 on a sheet 10 in order to produce a c-shaped fold line 20. Where the attachment pads 30 have an extremity which is close to the fold line 20, as in Figs. 2(a) and (b), the resulting fold will be more defined than where the nearest extremity of one or more attachment pads 30 is at a distance from the fold line20, as in Figs. 2(c) to (e). Also, the further the nearest extremity of an attachment pad 30 is from the intended fold line, the larger the tolerance on the actual achieved position, and vice versa.

Figs. 2(f) to (h) show only one attachment pad 30, although more than one pad is required to create the c-shaped fold line shown. These figures demonstrate some of a range of possible orientations of the attachment pads 30: parallel with the sheet edge (Fig. 2(f)); parallel with a ruled line on the surface to be achieved or perpendicular to the fold line (Fig. 2(g)); or parallel with the major axis of the shape to be achieved (Fig. 9(h)).

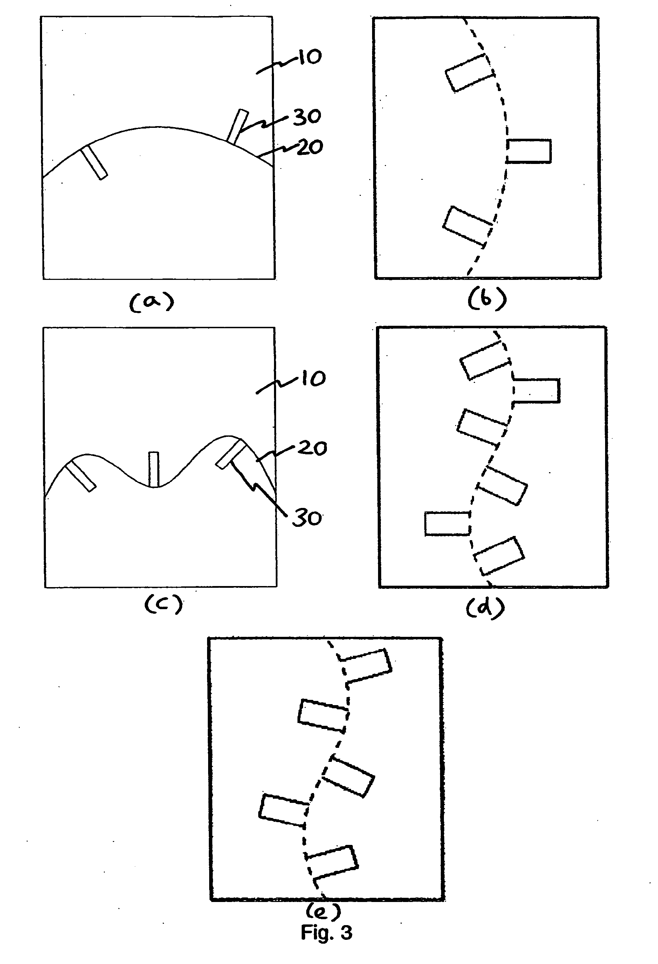

Figs. 3 (a) and (b) show two possible arrangements of attachment pads 30 on a sheet 10 in order to generate a c-shaped fold line 20, and Figs. 3 (c), (d) and (e) show three possible arrangements of attachment pads 30 on a sheet 10 in order to generate an s-shaped fold line 20. The minimum number of attachment pads 30 for generating a c-shaped fold line is two, and that for generating an s-shaped fold line is three. Further to this, continuation of the fold line with different curvatures will require at least one additional attachment pad to form a fold. Generally, the tightness of the curve will influence the number of attachment pads required.

Generally, it is necessary to have at least one attachment pad 30 on each side of the fold line 20.

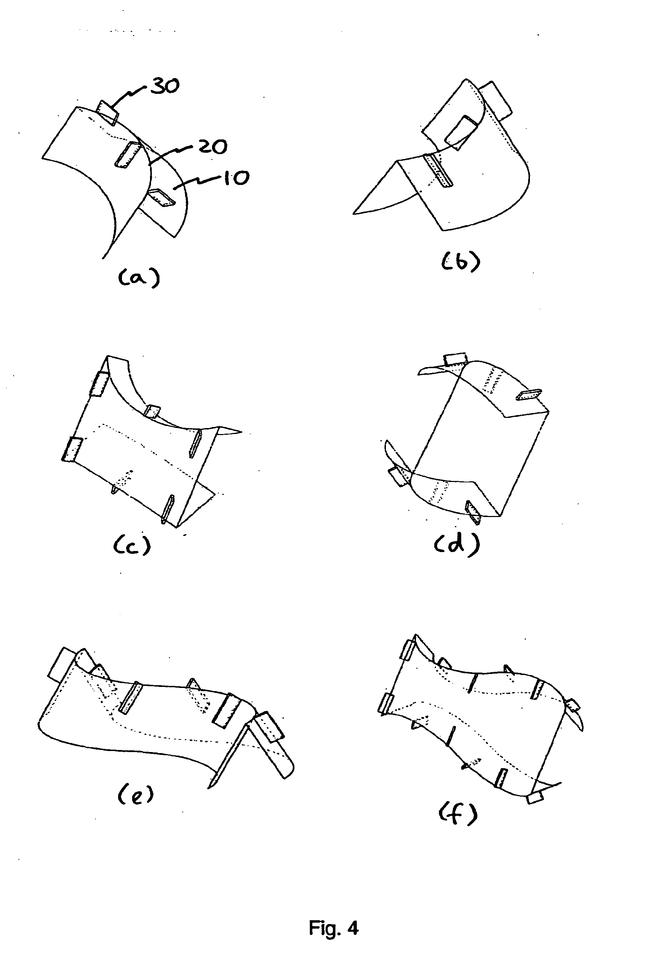

Figs. 4(a) to (f) show three-dimensional views of a sheet 10 folded in various ways. Figs. 4(c) to (f) demonstrate that a single sheet 10 may be folded more than once using the method of the present invention. The attachment pads 30 are shown in situ, and it can be seen that each attachment pad 30 has an extremity close to the fold line 20 and an extremity further from the fold line 20. The extremity close to the fold line serves to direct the formation of the fold line at the desired location, while that further away serves to apply leverage to the sheet. In this embodiment the attachment pads 30 must therefore each have an interface with the sheet which is large enough to impart suitable leverage during folding. Alternatively, the same effect may be achieved by simultaneously controlling two or more attachment pads 30: one attached close to the fold line and one or more attached further away from the fold line. It will also be possible in some cases to achieve the desired folds with attachment pads to the outside of both fold lines but with no attachment pads between the two fold lines.

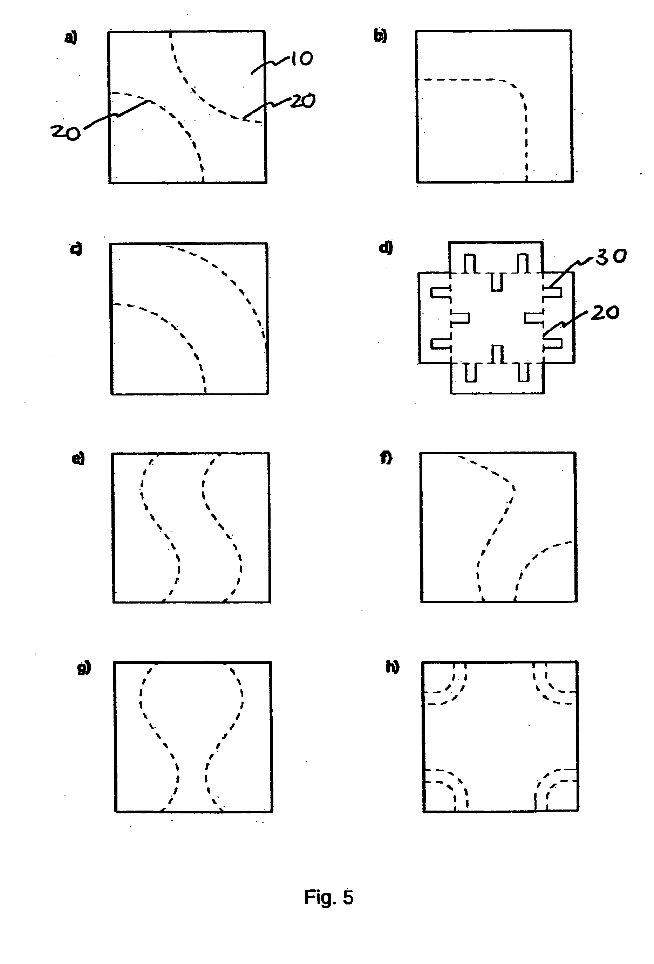

Figs. 5(a) to (h) show sheets 10 with various fold lines 20 (marked with broken lines) along which the sheet can be bent using the method of the present invention. Figs. 5(b) and (f) demonstrate that it is possible to bend sheets about fold lines which have both straight and curved portions. Fig. 5(d) shows a sheet which has been cut at the corners so that an open container can be formed by folding the tabs through 90 degrees about the marked fold lines. Fig. 5(d) also shows a suitable arrangement of attachment pads 30 for achieving the folds. Alternatively, the attachment pads on the central (square) panel of the sheet may be omitted and the folds be created using only the attachment pads on the tabs.

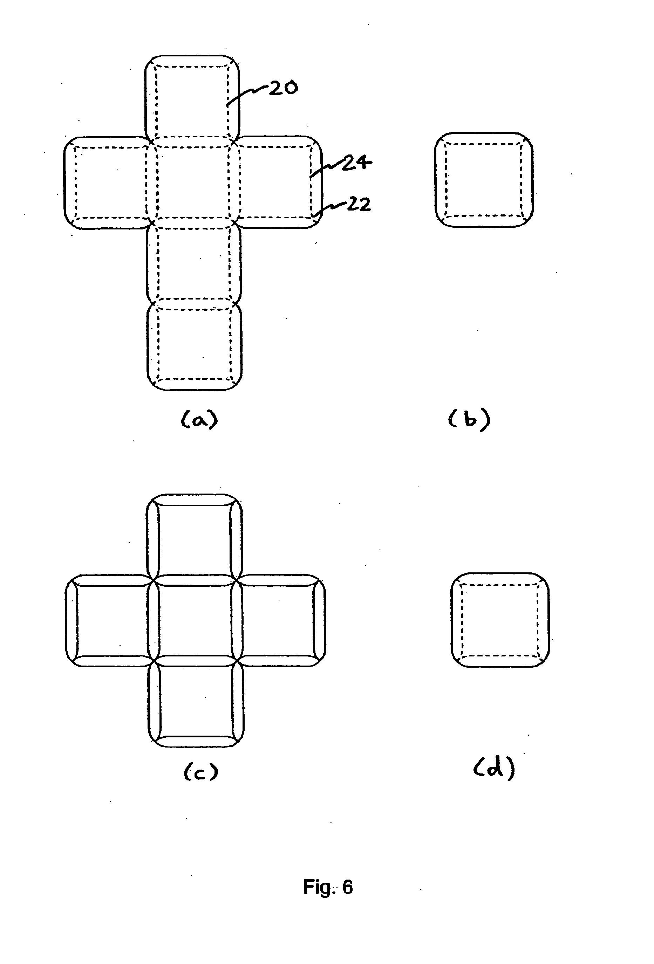

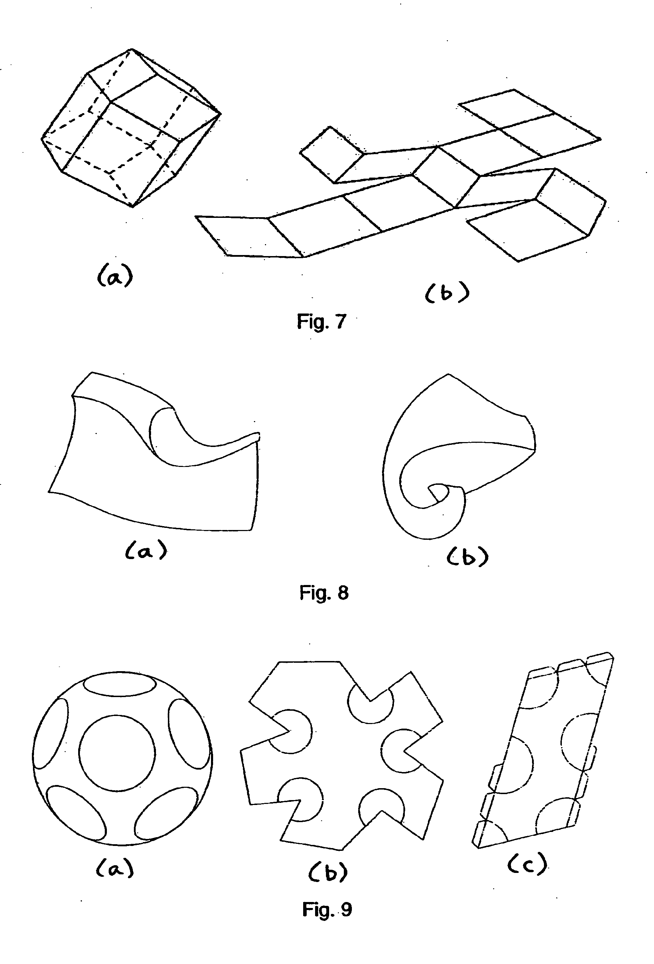

The method of the present invention can be used to produce closed or open structures such as boxes, as shown in Figs. 6(a) to (d). In Figs. 6(a) to (d) the folds 20 have both curved 22 and straight 24 portions which define curved or chamfered edges on the assembled box. It is possible to create quite complex closed structures, such as those illustrated in Figs 7 (a) and (b), Figs. 8 (a) and (b), and Fig. 9 (a). The structure shown in Fig. 8 (a) shows a branched fold, i.e. a fold line which has been split to form two separate fold lines, or alternatively two intersecting fold lines. The structure shown in Fig. 9(a) is made up of the five of the sheets shown in Fig. 9 (c), folded and joined together. A similar irregular embodiment is also shown in Fig. 9 (b).

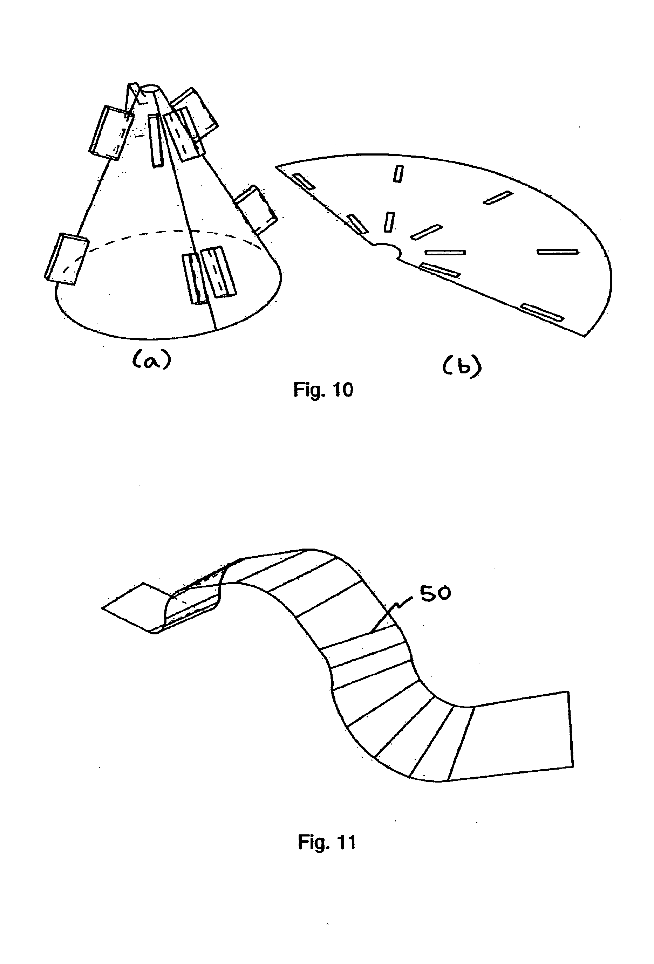

It is also possible to create relatively simple structures such as cylinders, or cones or frusto-cones, as illustrated in Figs. 10 (a) and (b). A particular advantage of the present invention is that the attachment pads 30 can be used to hold a closed structure in its closed state while it is fixed in position, e.g. by welding, gluing, bolting, riveting etc., or while it is marked, measured, or assembled with another part, or further worked by e.g. drilling, slotting, additional folding or bending.

Fig. 11 shows a sheet consisting of conical, flat and cylindrical surface patches orientated tangent to one another. The lines 50 shown in Fig. 11 are surface rulings, not fold lines.

A plurality of fold lines 20 that may be generated on a single sheet. A sheet can be bent in the same direction about adjacent fold lines and adjacent fold lines can have differing, or opposing, angles relative to the sheet. Where there are multiple fold lines on the same sheet it is possible to 'share' attachment pads between fold lines. For example, where it is desired to bend a sheet in the same direction about two fold lines, one attachment pad may provide leverage for two attachment pads located near the respective fold lines.

Where several fold lines are desired on a single sheet, the folds may be generated simultaneously or in a series of stages.

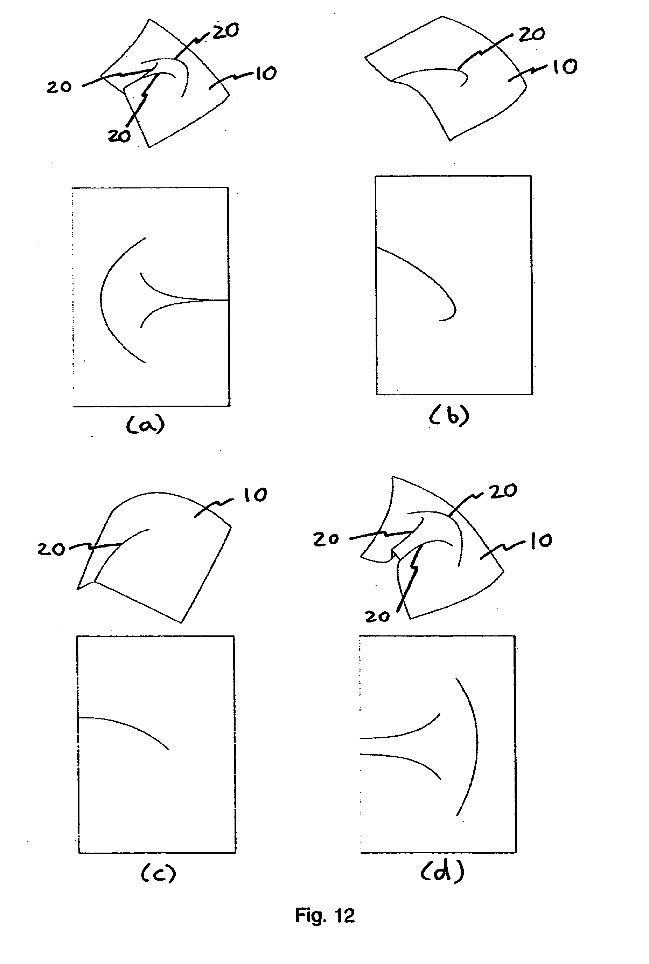

A fold line 20 need not start or end at the edge of a sheet 10, as illustrated by Figs. 12 (a) to (d). Where a fold line starts or ends away from the edge of a sheet it is said to fade. Attachment pads guide the fold line and are required to change the path of a fold line or maintain the path of a fold line. As such, where attachment pads are omitted a fold line will gradually and smoothly fade. Where fading is not desired application pads should be included close enough to the edge of the sheet to avoid this effect.

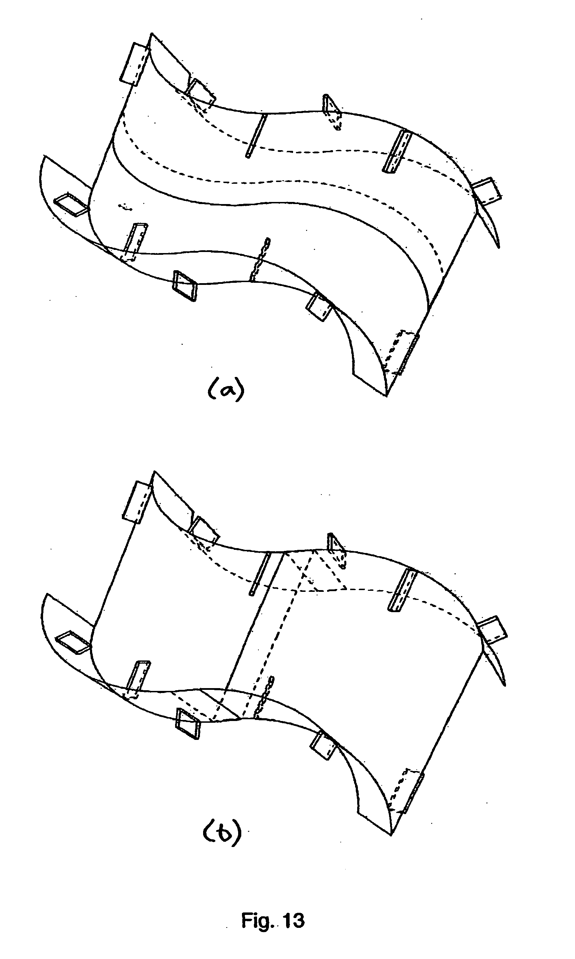

Where a very large structure is required, or where only relatively small sheets are available, two or more sheets may be bent using the method of the present invention and then subsequently joined together, as shown in Figs. 13 (a) and (b).

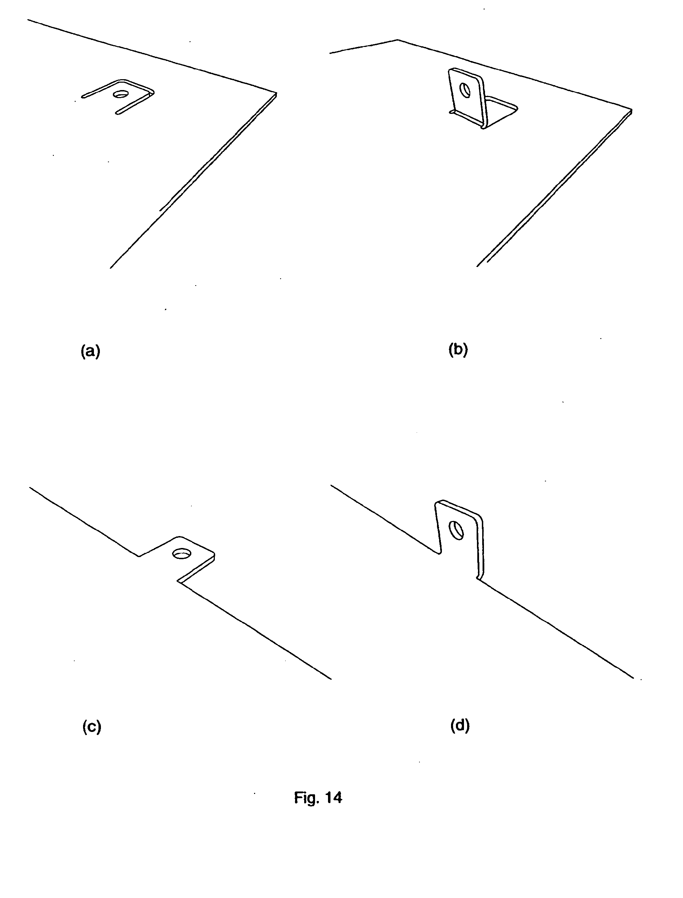

The method of the invention can also be used to bend or fold tab or flap portions of sheet material, for example as shown in figs. 14 (a) to (d). Figs. 4(a) and (b) show a tab that has been formed inward of an edge of the sheet (e.g. by stamping, cutting, etc). The method of the invention can then be used to fold the tab up from the position seen in fig. 14(a) to the position seen in fig. 14(b) by having one attachment device attached to the tab and another attached the remainder of the sheet. In this case, the remainder of the sheet will typically be held stationary whilst the attachment device attached to the tab is moved through a predetermined trajectory to fold up the tab. A method in accordance with the invention could also be used to fold the tab from the upstanding position seen in fig 4(b) to the position seen in fig. 4(a) in a similar fashion.

As seen in figs. 4(c) and (d), a similar approach can be adopted to fold up (or down) a tab formed on the extremity of a sheet.

In the example illustrated in fig. 4, the tabs are formed with holes through their centres. These holes can be used for attachment on the attachment devices as an alternative to e.g. suction cups.

## Claims

1. A method of bending sheet material (10), including the steps of:
attaching two or more attachment devices (30) to a surface of a sheet (10) to be bent at respective points of attachment on the surface; and
moving the attached attachment devices (30) relative to one another by moving one or more of the attachment devices (30) along a predetermined trajectory to apply a force to the material through the attachment points and move the surface of the sheet (10) at the point of attachment of the attachment device (30) in order to bend the sheet (10).

2. A method according to claim 1, wherein each of the two or more attachment devices (30) is moved in space along a predetermined trajectory to move the surface of the sheet (10) at the point of attachment of the attachment device (30).

3. A method according to claim 1 or claim 2, wherein the attachment devices (30) are attached inward of the edges of the sheet (10) to be bent.

4. A method according to any one of claims 1 to 3, wherein the method is a method of bending sheet material (10) into a form comprising one or more surface patches, wherein each surface patch is in the form of a flat, a cylinder, a part of a cylinder a cone or a part of a cone.

5. A method according to any one of claims 1 to 3, wherein the method is a method of bending sheet material (10) along a fold line (20), and the fold line (20) separates at least one attachment device (30) from the remaining attachment device or devices.

6. A method according to claim 5, wherein the fold line (20):
a) is curvilinear; or
b) is straight; or
c) includes a curvilinear portion and a straight portion.

7. A method according to claims 5 or claim 6, wherein each attachment device (30) includes:
a) two or more attachment pads; or
b) three attachment pads.

8. A method according to claim 7, wherein a first attachment pad for guiding the bend is attached proximal to the fold line (20).

9. A method according to claim 8, wherein a second attachment pad for providing leverage is attached further from the fold line (20) than the first attachment pad.

10. A method according to claim 5 or claim 6, wherein each attachment device (30) includes one attachment pad.

11. A method according to claim 10, wherein the attachment pad is attached such that a first extremity for guiding the bend is proximal to the fold line (20) and a second extremity for providing leverage is further from the fold line (20) than the first extremity.

12. A method according to any one of claims 5 to 11, including the initial step of providing a line of weakness along the fold line (20) by any one of: scoring, pre-folding, rolling, perforating or otherwise removing sections of material.

13. A method according to any one of claims 5 to 11, wherein the method is a method of bending sheet material (10) along a plurality of fold lines (20).

14. A method according to claim 13, wherein one or more of the plurality of fold lines (20) are non-parallel.

15. A system for bending sheet material (10), including two or more actuatable attachment devices (30) for attachment at a point on the surface of a sheet (10) to be bent and a controller programmed to move the actuatable attachment devices (30) relative to one another by moving at least one of the attachment devices (30), at its point of attachment to the surface along a predetermined trajectory in accordance with the method of any one of claims 1 to 13.

## Patentansprüche

1. Verfahren zum Biegen von Bogenmaterial (10), welches folgende Schritte umfasst:
Befestigen von zwei oder mehreren Befestigungsvorrichtungen (30) an einer Bogenoberfläche (10), um sie an entsprechenden Befestigungspunkten an der Oberfläche zu biegen; und
Bewegen der befestigten Befestigungsvorrichtungen (30) relativ zueinander durch Bewegen einer oder mehrerer Befestigungsvorrichtungen (30) entlang einer vorbestimmten Bahn, um über die Befestigungspunkte eine Kraft auf das Material auszuüben und die Bogenoberfläche (10) am Befestigungspunkt der Befestigungsvorrichtung (30) so zu bewegen, dass der Bogen gebogen (10) wird.

2. Verfahren nach Anspruch 1, worin jede der zwei oder mehreren Befestigungsvorrichtungen (30) entlang einer vorbestimmten Bahn im Raum bewegt wird, um die Bogenoberfläche (10) am Befestigungspunkt der Befestigungsvorrichtung (30) zu bewegen.

3. Verfahren nach Anspruch 1 oder 2, worin die Befestigungsvorrichtungen (30) innerhalb der Kanten des zu biegenden Bogens (10) befestigt sind.

4. Verfahren nach einem der Ansprüche 1 bis 3, wobei es sich bei dem Verfahren um ein Verfahren zum Biegen von Bogenmaterial (10) in eine Form handelt, die einen oder mehrere Oberflächenteile umfasst, wobei jeder Oberflächenteil flach oder zylindrisch ist oder die Form eines Teils eines Zylinders oder eines Kegels oder eines Teils eines Kegels aufweist.

5. Verfahren nach einem der Ansprüche 1 bis 3, wobei es sich bei dem Verfahren um ein Verfahren zum Biegen von Bogenmaterial (10) entlang einer Falzlinie (20) handelt, wobei die Falzlinie (20) mindestens eine Befestigungsvorrichtung (30) von der bzw. den übrige(n) Befestigungsvorrichtung(en) trennt.

6. Verfahren nach Anspruch 5, worin die Falzlinie (20)
a) krummlinig ist; oder
b) gerade ist; oder
c) einen krummlinigen und einen geraden Abschnitt umfasst.

7. Verfahren nach Anspruch 5 oder 6, worin jede Befestigungsvorrichtung (30) Folgendes umfasst:
a) eines oder mehrere Befestigungselemente; oder
b) drei Befestigungselemente.

8. Verfahren nach Anspruch 7, worin ein erstes Befestigungselement zum Führen der Biegung nahe der Falzlinie befestigt ist (20).

9. Verfahren nach Anspruch 8, worin ein zweites Befestigungselement zur Bereitstellung einer Hebelwirkung weiter weg von der Falzlinie (20) als das erste Befestigungselement befestigt ist.

10. Verfahren nach Anspruch 5 oder 6, worin jede Befestigungsvorrichtung (30) ein Befestigungselement umfasst.

11. Verfahren nach Anspruch 10, worin das Befestigungselement so befestigt ist, dass eine erste Extremität zum Führen der Biegung sich nahe der Falzlinie (20) befindet und eine zweite Extremität zur Bereitstellung einer Hebelwirkung sich weiter weg von der Falzlinie (20) als die erste Extremität befindet.

12. Verfahren nach einem der Ansprüche 5 bis 11, umfassend als ersten Schritt die Bereitstellung einer Sollbruchlinie entlang der Falzlinie (20) durch eines von: Kerbung, Vorfalten, Rollen, Perforieren oder sonst Entfernen von Materialabschnitten.

13. Verfahren nach einem der Ansprüche 5 bis 11, wobei es sich beim Verfahren um ein Verfahren zum Biegen von Bogenmaterial (10) entlang einer Vielzahl von Falzlinien (20) handelt.

14. Verfahren nach Anspruch 13, worin eine oder mehreren der Vielzahl an Falzlinien (20) nicht parallel sind.

15. Verfahren zum Biegen von Bogenmaterial (10), umfassend zwei oder mehrere betätigbare Befestigungsvorrichtungen (30) zum Befestigen an einem Punkt an einer zu biegenden Bogenoberfläche (10) und eine Steuervorrichtung, die so programmiert ist, dass die betätigbaren Befestigungsvorrichtungen (30) sich relativ zu einander bewegen, indem mindestens eine der Befestigungsvorrichtungen (30) bewegt wird und zwar an ihrem Befestigungspunkt an der Oberfläche entlang einer vorbestimmten Bahn in Übereinstimmung mit dem Verfahren nach einem der Ansprüche 1 bis 13.

## Revendications

1. Procédé de cintrage d'un matériau en feuille (10) comprenant les étapes consistant à:
fixer deux dispositifs de fixation (30) ou plus sur une surface d'une feuille (10) à cintrer à des points de fixation respectifs sur la surface; et
déplacer les dispositifs de fixation (30) fixés les uns par rapport aux autres en déplaçant un ou plusieurs des dispositifs de fixation (30) le long d'une trajectoire prédéterminée pour appliquer une force sur le matériau par le biais des points de fixation et déplacer la surface de la feuille (10) au point de fixation du dispositif de fixation (30) afin de cintrer la feuille (10).

2. Procédé selon la revendication 1, dans lequel chacun des deux dispositifs de fixation (30) ou plus est déplacé dans l'espace le long d'une trajectoire prédéterminée pour déplacer la surface de la feuille (10) au point de fixation du dispositif de fixation (30).

3. Procédé selon la revendication 1 ou la revendication 2, dans lequel les dispositifs de fixation (30) sont fixés vers l'intérieur des bords de la feuille (10) à cintrer.

4. Procédé selon l'une quelconque des revendications 1 à 3, dans lequel le procédé est un procédé de cintrage de matériau en feuille (10) en une forme comprenant une ou plusieurs pièces de surface, dans lequel chaque pièce de surface se présente sous la forme d'un méplat, d'un cylindre, d'une partie d'un cylindre, d'un cône ou d'une partie d'un cône.

5. Procédé selon l'une quelconque des revendications 1 à 3, dans lequel le procédé est un procédé de cintrage de matériau en feuille (10) le long d'une ligne de pliage (20), et la ligne de pliage (20) sépare au moins un dispositif de fixation (30) du dispositif ou des dispositifs de fixation restant(s).

6. Procédé selon la revendication 5, dans lequel la ligne de pliage (20):
a) est curviligne; ou
b) est droite; ou
c) comprend une partie curviligne et une partie droite.

7. Procédé selon la revendication 5 ou la revendication 6, dans lequel chaque dispositif de fixation (30) comprend:
a) deux coussinets de fixation ou plus; ou
b) trois coussinets de fixation.

8. Procédé selon la revendication 7, dans lequel un premier coussinet de fixation pour guider le cintrage est fixé à proximité de la ligne de pliage (20).

9. Procédé selon la revendication 8, dans lequel un second coussinet de fixation pour fournir l'effet de levier est fixé plus loin de la ligne de pliage (20) que le premier coussinet de fixation.

10. Procédé selon la revendication 5 ou la revendication 6, dans lequel chaque dispositif de fixation (30) comprend un coussinet de fixation.

11. Procédé selon la revendication 10, dans lequel le coussinet de fixation est fixé de sorte qu'une première extrémité pour guider le cintrage est à proximité de la ligne de pliage (20) et une seconde extrémité pour fournir l'effet de levier est plus éloignée de la ligne de pliage (20) que la première extrémité.

12. Procédé selon l'une quelconque des revendications 5 à 11, comprenant l'étape initiale consistant à prévoir une ligne de faiblesse le long de la ligne de pliage (20) par l'une quelconque des étapes consistant à: entailler, pré-plier, laminer, perforer ou bien retirer des sections de matériau.

13. Procédé selon l'une quelconque des revendications 5 à 11, dans lequel le procédé est un procédé de cintrage de matériau en feuille (10) le long d'une pluralité de lignes de pliage (20).

14. Procédé selon la revendication 13, dans lequel une ou plusieurs de la pluralité de lignes de pliage (20) ne sont pas parallèles.

15. Système pour cintrer un matériau en feuille (10) comprenant deux dispositifs de fixation (30) ou plus pouvant être actionnés pour la fixation à un point sur la surface d'une feuille (10) à cintrer et un organe de commande programmé pour déplacer les dispositifs de fixation (30) pouvant être actionnés les uns par rapport aux autres en déplaçant au moins l'un des dispositifs de fixation (30), au niveau de son point de fixation, sur la surface le long d'une trajectoire prédéterminée selon le procédé selon l'une quelconque des revendications 1 à 13.
